# EUROPEAN PATENT APPLICATION

(11) **EP 4 717 432 A1**
(43) Date of publication of application: **01.04.2026**
(21) Application number: 25205666.8
(22) Date of filing: 30.09.2025
(51) Int. Cl.: B29C 45/74, B29C 45/78

(54) **INJECTION MOLDING MACHINE**

(30) Priority: 30.09.2024 JP 2024170918
(71) Applicant: Toyo Innovex Co., Ltd., Akashi-shi, Hyogo (JP)
(72) Inventor: KASAHARA, Ryuto, Akashi-shi, Hyogo (JP)
(74) Representative: Pintz, György

(57) **Abstract**

An injection molding machine includes: a cylinder having a nozzle for injecting a molten resin into a mold; a screw configured to move forward and backward in the cylinder; a heater arranged around an outer circumference of the nozzle; and a control device configured to control forward and backward movement of the screw and operation of the heater. The control device causes the heater to operate at a predetermined current value in a predetermined period, as part of an injection process to inject the molten resin into the mold by forward movement of the screw, of a molding cycle to heat the nozzle.

## Description

### BACKGROUND OF THE INVENTION

### Field of the Invention

The present invention relates to an injection molding machine to manufacture molded articles by injecting a molten resin into a mold.

### Description of the Related Art

PTL 1 discloses an injection molding machine to manufacture molded articles by injecting a molten resin into a mold. The injection molding machine includes a nozzle attached to a distal end of a heating cylinder and a heater wrapped around the nozzle. In this injection molding machine, the heater is heated at a predetermined current carrying value in a predetermined process period of a molding cycle, specifically for a predetermined time in a mold closing process. It is possible to manufacture high grade molded articles by uniformizing the amount of heat applied to the nozzle from the heater in each molding cycle.

PTL 1 refers to JP 2006-192646 A.

### SUMMARY OF THE INVENTION

To improve the yield of molded articles, it is desired to improve the quality of molded articles more.

In view of such a circumstance, one or more embodiments of the present disclosure provide an injection molding machine that is capable of manufacturing high quality molded articles with high yield.

As a result of intensive investigation, the present inventor has found that the injection pressure of the molten resin from the nozzle is prone to vary in an injection process of the molding cycle and the variation affects the quality of the molded articles. Based on the findings, the present inventor has completed an injection molding machine of the present invention described below.

An injection molding machine according to an embodiment of the present invention includes: a cylinder having a nozzle for injecting a molten resin into a mold; a screw configured to move forward and backward in the cylinder; a heater arranged around an outer circumference of the nozzle; and a control device configured to control forward and backward movement of the screw and operation of the heater. The control device causes the heater to operate at a predetermined current value in a predetermined period, as part of an injection process to inject the molten resin into the mold by forward movement of the screw, of a molding cycle to heat the nozzle.

The injection molding machine of the present invention is capable of manufacturing high quality molded articles with high yield.

### BRIEF DESCRIPTION OF THE DRAWINGS

FIG. 1 is a schematic block diagram of an injection molding machine according to a first embodiment.
FIG. 2 is a partially enlarged cross-sectional view of the injection molding machine in FIG. 1 near a nozzle.
FIG. 3 is a schematic block diagram illustrating an example of an input device illustrated in FIG. 1.
FIG. 4 is an explanatory diagram illustrating processes constituting a molding cycle.
FIG. 5 is an explanatory diagram illustrating a predetermined period while a heater to heat the nozzle operates in an injection process.
FIG. 6 is a graph illustrating changes in injection pressure of a resin from the nozzle if the heater operation is controlled by a Proportional-Integral-Differential (PID) controller in the injection process.

### DETAILED DESCRIPTION OF THE INVENTION

A description is given below to an injection molding machine according to embodiments with reference to the drawings. In the drawings, identical reference signs indicate an identically named section. The shape, size, positional relationship, and the like illustrated in each drawing are represented to facilitate clear understanding of the description and do not have to represent the actual shape, size, positional relationship, and the like. It should be noted that the present invention is not limited to the configurations in embodiments described below and is indicated by the appended claims and is intended to include all modifications in the meaning and scope equivalent to the claims.

### First Embodiment

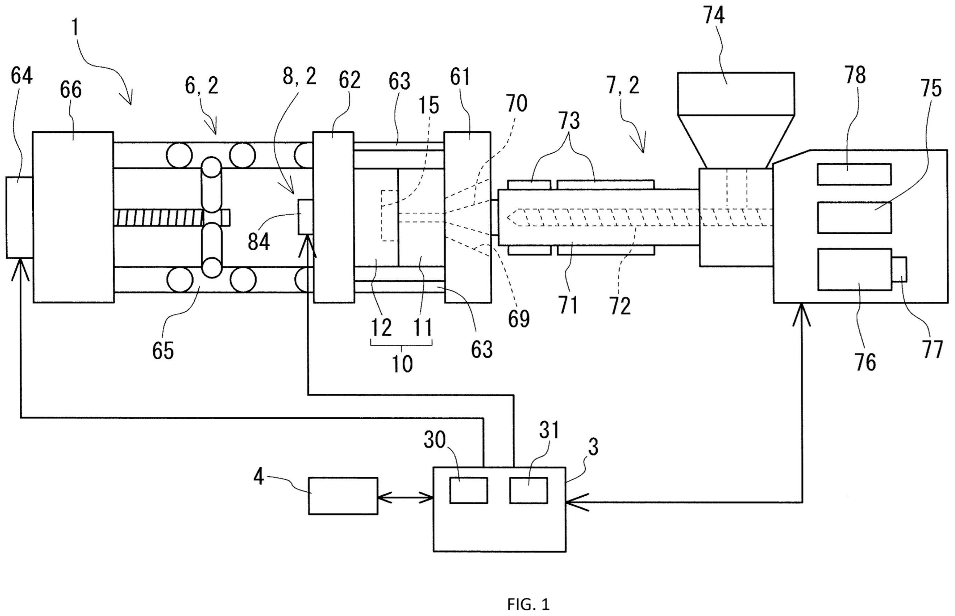

An injection molding machine 1 in the first embodiment illustrated in FIG. 1 is a device to manufacture molded articles using a molten material injected into a mold 10. The injection molding machine 1 includes a molding unit 2, a control device 3, and an input device 4. The molding unit 2 is a main component of the injection molding machine 1. The molten material used for the injection molding machine 1 is a molten resin obtained by plasticizing a resin. The input device 4 is a device for inputting an instruction to the injection molding machine 1 by an operator. The control device 3 is a device configured to control the molding unit 2 based on the instruction input by the operator. One of the features of the injection molding machine 1 in the present embodiment is control of heaters 73 provided at the molding unit 2 of the injection molding machine 1. In the description below, each component of the injection molding machine 1 is described and then control of the heaters 73 is described.

### Molding Unit

The molding unit 2 in the present embodiment is provided with a mold opening/closing unit 6 to open and close the mold 10, an injection unit 7 to inject the molten resin into the mold 10, and an ejector unit 8 to eject a molded article from the mold 10. The molding unit 2 may be further provided with a spray unit to spray a fluid, such as air or a mold release agent, on an inner circumferential surface of the mold 10.

### Mold Opening/Closing Unit

The mold opening/closing unit 6 is configured to perform opening, closing, and clamping of the mold 10. The mold 10 is provided with a fixed mold 11 and a movable mold 12. The mold opening/closing unit 6 is provided with a fixed die plate 61 supporting the fixed mold 11 and a movable die plate 62 supporting the movable mold 12. The mold opening/closing unit 6 is further provided with tie bars 63, a driving device 64, and a toggle link mechanism 65. Each tie bar 63 arranged on the injection unit 7 side has a first end fixed to the fixed die plate 61. Each tie bar 63 has a second end, on the opposite side to the first end, fixed to a tailstock 66. Each tie bar 63 has an intermediate portion passing through the movable die plate 62. The movable die plate 62 moves along the tie bars 63 by, for example, transmission of a driving force of the driving device 64, such as a motor, through the toggle link mechanism 65.

When the movable die plate 62 moves in the left direction of FIG. 1, the movable mold 12 is separated from the fixed mold 11 to open the mold 10. When the movable die plate 62 moves in the right direction of FIG. 1, the movable mold 12 abuts on the fixed mold 11 to close the mold 10. When a pressure in the right direction of FIG. 1 is further applied to the movable mold 12 of the closed mold 10 by the movable die plate 62, the fixed mold 11 and the movable mold 12 are clamped.

### Injection Unit

The injection unit 7 is configured to inject the molten resin into the clamped mold 10. The injection unit 7 is provided with a cylinder 71, a screw 72, the plurality of heaters 73, and a hopper 74. The cylinder 71 has a distal end provided with a nozzle 70. The screw 72 is configured to move forward and backward in the cylinder 71. The direction of moving the screw 72 forward in the present embodiment is the direction bringing the distal end of the screw 72 close to the mold 10. The direction of moving the screw 72 backward is the direction opposite to the forward movement direction.

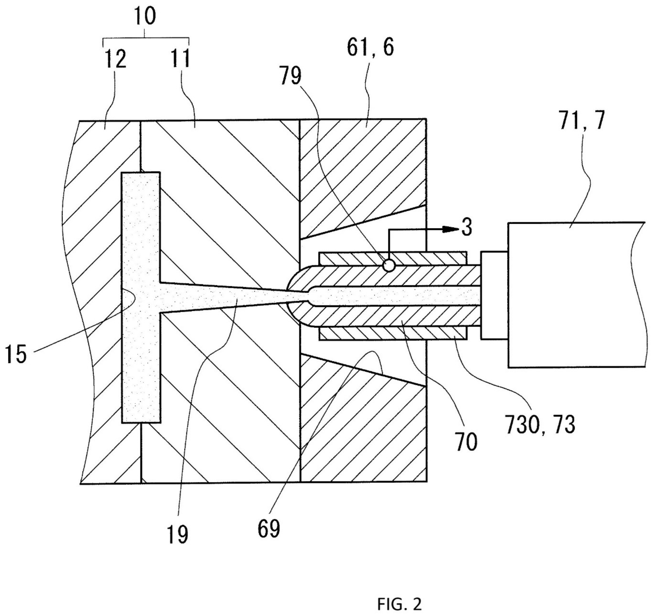

Each of the plurality of heaters 73 is arranged around an outer circumference of the cylinder 71 to heat the cylinder 71. The plurality of heaters 73 are individually controllable. Out of the plurality of heaters 73, a heater 730 arranged around an outer circumference of the nozzle 70 illustrated in FIG. 2 greatly exerts influence on the injection pressure of a molten resin 19 injected from the nozzle 70. Heating of the nozzle 70 by the heater 730 allows a decrease in the injection pressure. Between the nozzle 70 and the heater 730, a temperature sensor 79 is arranged. The measurement results of the temperature sensor 79 are input to the control device 3 and used for control of the heaters 73. A too high temperature of the cylinder 71 causes a risk of degrading the molten resin 19. Monitoring of the temperature of the cylinder 71 by the temperature sensor 79 allows preventing the molten resin 19 from degradation.

The cylinder 71 is a tubular member, and the nozzle 70 of the cylinder 71 is inserted into a through path 69 of the fixed die plate 61. The nozzle 70 has a distal end in contact with the fixed mold 11. The molten resin 19 injected into the mold 10 from the nozzle 70 is filled in a cavity 15, which is an internal space of the mold 10, to form a molded article. The hopper 74 is a funnel-shaped member to supply resin chips to be a raw material for the molten resin 19 into the cylinder 71.

As illustrated in FIG. 1, the injection unit 7 is further provided with a measurement motor 75 and an injection motor 76. The measurement motor 75 causes the screw 72 to rotate in a measurement process described later to convey the resin chips supplied from the hopper 74 toward the distal end of the cylinder 71. The conveyed resin chips are melted by the heat of the heaters 73. The injection motor 76 causes the screw 72 to move forward in an injection process described later to inject the molten resin 19 into the mold 10. The rotating force of the injection motor 76 is converted into straight forward movement of the screw 72 by an appropriate mechanism. The injection motor 76 is provided with an encoder 77 arranged as a position sensor to measure the position of the screw 72 in the cylinder 71. In addition, the screw 72 has a rear end, not shown, provided with a load cell 78 arranged as a pressure sensor to measure the injection pressure of the molten resin 19 injected from the nozzle 70. The load cell 78 measures the pressure applied to the screw 72 from the molten resin 19 in the cylinder 71. The pressure applied to the screw 72 correlates with the injection pressure of the molten resin 19 injected from the nozzle 70. It is thus possible to obtain the injection pressure by arithmetic operation based on the measurement of the load cell 78.

### Ejector Unit

The ejector unit 8 is configured to push out a molded article from the opened mold 10. The ejector unit 8 is provided with a plurality of pins (not shown) to push out a molded article and a driving device 84, such as a motor, to move the pins forward and backward.

### Input Device

The input device 4 is a component for instructing the injection molding machine 1 by an operator that operates the injection molding machine 1. Such an instruction by the operator includes a mode instruction to specify a specific operation mode selected from a plurality of operation modes, an operation instruction for the molding unit 2 in each operation mode, a setting instruction for molding conditions, such as the injection speed, and the like.

The operation modes include "OFF mode", "replacement mode", "manual mode", "semi-automatic mode", "full-automatic mode", and the like. The OFF mode is a mode for stopping the operation of the injection molding machine 1. In the OFF mode, it is possible to turn off the power supply of the injection molding machine 1. In the OFF mode, it is also possible to perform settings of the molding conditions and the like. The replacement mode is a mode for performing replacement of the mold 10 or adjustment of the operation of the respective units 6, 7, and 8 in a series of molding cycles. In the replacement mode, the respective units 6, 7, and 8 operate at low speeds. The manual mode is a mode to give a manual instruction for all operation related to molding, such as opening and closing of the mold 10 and injection of the molten resin 19, for example, one by one by the operator. The semi-automatic mode is a mode to stop the operation of the molding unit 2 every time one molding cycle is performed. The full-automatic mode is a mode of fully automatic operation where the molding cycle is continuously performed a preset number of times, thereby continuously manufacturing molded articles.

Each operation instruction is an instruction to cause a component provided at the molding unit 2 to start operation. For example, an operation instruction in the manual mode includes an instruction to cause the mold opening/closing unit 6 to close the mold 10, an instruction to cause the injection unit 7 to inject the molten resin 19 into the mold 10, and the like. In addition, for example, an operation instruction in the semi-automatic mode includes an instruction to cause the molding unit 2 to start a new molding cycle, and the like.

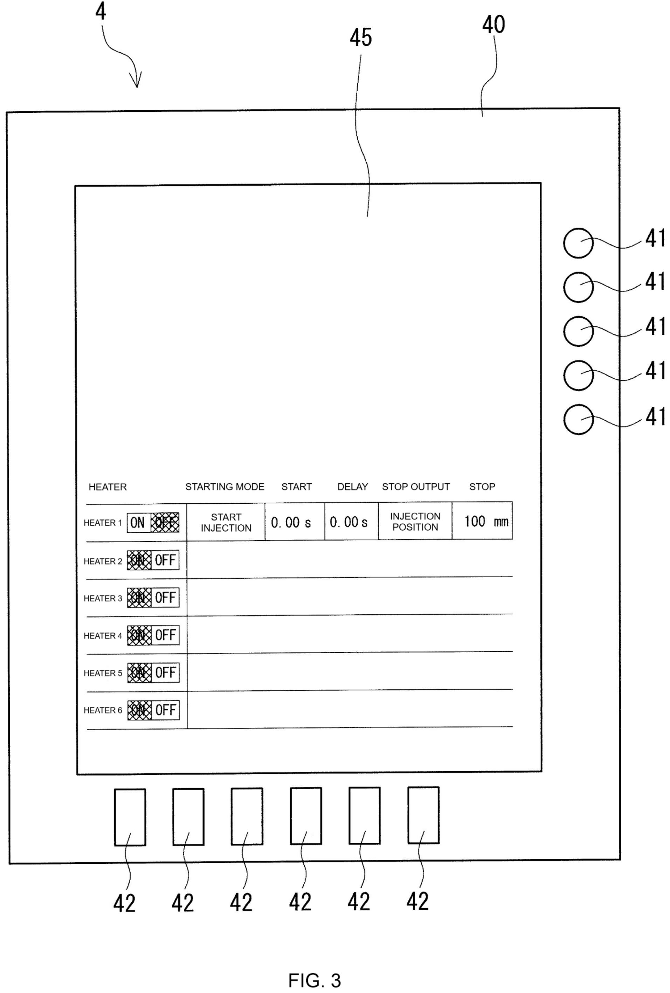

FIG. 3 is an example of the input device 4. The input device 4 in the present embodiment is provided with a housing 40, a plurality of mode specification switches 41, a plurality of start operation switches 42, and a display section 45. The mode specification switches 41 are, for example, hardware switches of the push button type to be pressed down when the operator specifies the operation mode. The start operation switches 42 are, for example, hardware switches of the push button type to be pressed down when the operator gives an instruction for the operation of the molding unit 2. The mode specification switches 41 and the start operation switches 42 in the form of hardware switches readily prevent input errors by operators. The display section 45 displays the currently selected operation mode, the currently performed operation and molding conditions, and the like. The display section 45 may be provided with software switches of the touchscreen type. Such a software switch is used for, for example, setting molding conditions and the like. The information entities to be displayed in the display section 45 in FIG. 3 are described later.

### Control Device

The control device 3 illustrated in FIG. 1 integrally controls the operation of the injection molding machine 1. The instruction input to the input device 4 by an operator is input to the control device 3 as an electrical signal. The control device 3 controls the molding unit 2 based on the specific operation mode selected by the operator.

The control device 3 is configured with a computer. The computer may be arranged in the housing 40 (refer to FIG. 3) of the input device 4. The computer is provided with a processor 30 and a storage medium 31. The processor 30 includes various processors compliant with control of the computer. Examples of such a processor include a central processing unit (CPU), a graphics processing unit (GPU), a digital signal processor (DSP), a field programmable gate array (FPGA), an application specific integrated circuit (ASIC), and the like. The processor 30 may include one or a plurality of processors. The plurality of processors 30 may be physically separately arranged and may execute the processes in cooperation with each other. The storage medium 31 stores a program for causing the injection molding machine 1 to manufacture molded articles. The storage medium 31 typically includes a read-only memory (ROM) and a random access memory (RAM). Execution of the program read from the storage medium 31 by the processor 30 causes the respective components of the injection molding machine 1 to operate.

The computer to integrally control the operation of the injection molding machine 1 may be a separate computer connected to the injection molding machine 1 via a network, such as a local area network (LAN), a wide area network (WAN), or the Internet.

### Control of Heaters in Injection Process

In the injection molding machine 1 of the present embodiment, the control device 3 causes the heater(s) 73 to operate at a predetermined current value in a predetermined period, as part of the injection process, of the molding cycle to heat the heater(s) 73. In the present embodiment, the heater(s) 73 to be controlled is the heater 730 arranged around the outer circumference of the nozzle 70 illustrated in FIG. 2. The heater 730 is not turned off during the predetermined period.

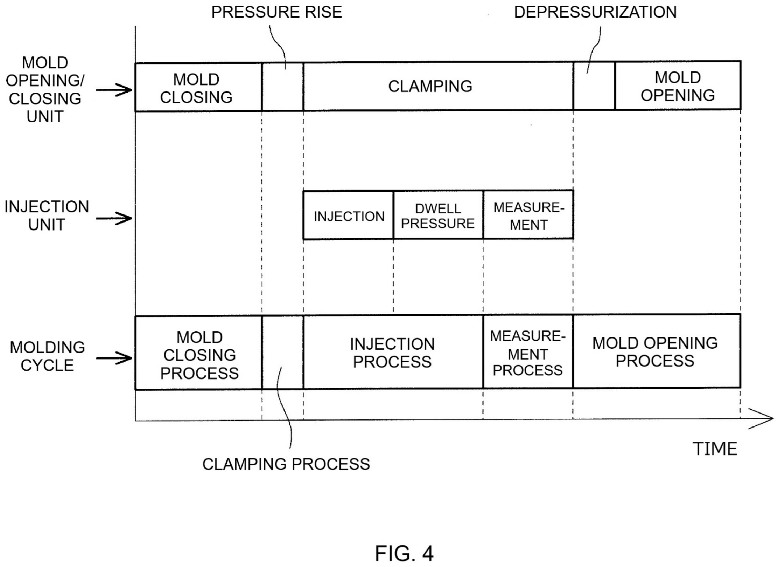

On explaining the injection process, the molding cycle for manufacturing molded articles is described with reference to FIG. 4. FIG. 4 illustrates the relationship between the processes constituting the molding cycle and the operation of the mold opening/closing unit 6 and the injection unit 7 in the respective processes. In FIG. 4, time elapses toward the right direction of FIG. 4. The molding cycle includes a mold closing process, a clamping process, the injection process, the measurement process, and a mold opening process. The molding cycle may include a product ejection process, not shown. The product ejection process is a process to eject a molded article from the mold 10 by the ejector unit 8.

In the mold closing process, the mold opening/closing unit 6 performs mold closing operation to close the mold 10. The mold closing operation is operation to bring the movable mold 12 closer to the fixed mold 11 to cause the movable mold 12 to be in contact with the fixed mold 11. In the clamping process after the mold closing process, the mold opening/closing unit 6 performs clamping operation to clamp the mold 10. The clamping operation is operation to raise the pressure from the movable mold 12 to the fixed mold 11. As a result, the fixed mold 11 and the movable mold 12 are clamped at a predetermined pressure. FIG. 4 illustrates "clamping" after "mold closing" as the operation of the mold opening/closing unit. After the end of the mold closing process, the state of clamping the mold 10 at the predetermined pressure is maintained until the start of the mold opening process described later.

In the injection process, injection operation is performed where the molten resin 19 is injected into the mold 10 from the injection unit 7 and the mold 10 is filled with the molten resin 19. In the injection operation, the screw 72 moves forward in the cylinder 71. In the injection process, dwelling operation is further performed after the injection operation. In the dwelling operation, the screw 72 moves forward in the cylinder 71 at a lower speed than the injection operation. The distance moved by the screw 72 in the dwelling operation is very small.

In the measurement process, the screw 72 moves backward and also rotates to cause a predetermined amount of resin chips to be introduced into the cylinder 71 from the hopper 74. The resin chips are melted by heating of the heaters 73. As a result, the predetermined amount of the molten resin 19 is measured in the cylinder 71.

In the mold opening process, the mold opening/closing unit 6 performs depressurization operation to gradually reduce the clamping of the fixed mold 11 and the movable mold 12. In the mold opening process, the mold opening/closing unit 6 further performs mold opening operation to cause the movable mold 12 to separate from the fixed mold 11. That is, the mold opening process is a process to reduce the clamping force between the fixed mold 11 and the movable mold 12 and to further cause the movable mold 12 to separate from the fixed mold 11 and thus to be in a state allowing the molded article to be ejected from the mold 10.

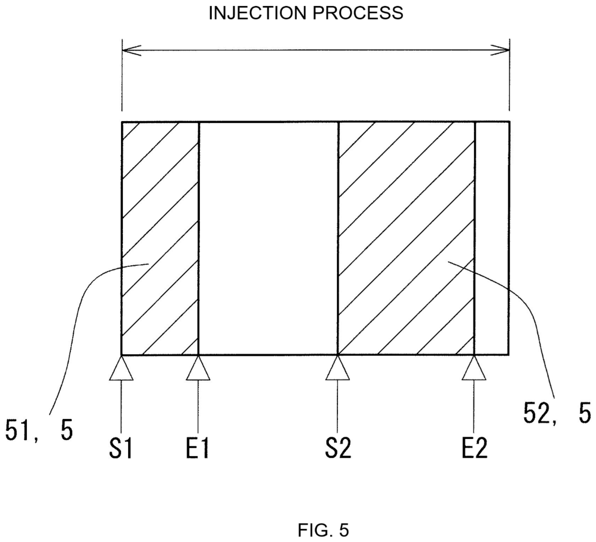

In the injection molding machine 1 of the present embodiment, the control device 3 controls the heater 730 to raise the temperature of the heater 730 in a predetermined period as part of the injection process. It is possible to set the time of starting and ending the predetermined period at arbitrary time points in the injection process. The predetermined period is at least one of, for example, a period when the injection pressure in the injection process outstandingly changes or a period when the injection pressure varies without being stabilized. FIG. 5 illustrates an example of a predetermined period 5. The hatched areas in the injection process illustrated in FIG. 5 represent the predetermined period 5 in which the heater 730 operates. The predetermined period 5 in the present embodiment includes two periods: a first period 51 and a second period 52. The number of periods included in the predetermined period 5 may be one or may be three or more.

The first period 51 includes a first stage of the injection process. The first stage of the injection process is a first half period when the time from the start to the end of the injection process is divided into two equal parts. That is, the first stage of the injection process includes an initial stage of the injection process including the start time of the injection process. The latter half period when the time from the start to the end of the injection process is divided into two equal parts is a latter stage of the injection process. A start heating time S1 in the first period 51 of the present embodiment, that is, the timing of turning on the heater 730 coincides with the start time of the injection process. An end heating time E1 in the first period 51 of the present embodiment, that is, the timing of turning off the heater 730 is within the range of the first stage of the injection process. The end heating time E1 may be within the range of the latter stage of the injection process.

The second period 52 includes at least part of the latter stage of the injection process. A start heating time S2 in the second period 52 of the present embodiment, that is, the timing of turning on the heater 730 is before and after the start of the latter stage of the injection process. The start heating time S2 may be within the range of the first stage of the injection process. An end heating time E2 in the second period 52 of the present embodiment, that is, the timing of turning off the heater 730 is within the range of the latter stage of the injection process. The end heating time E2 may reach a period of performing the process after the injection process.

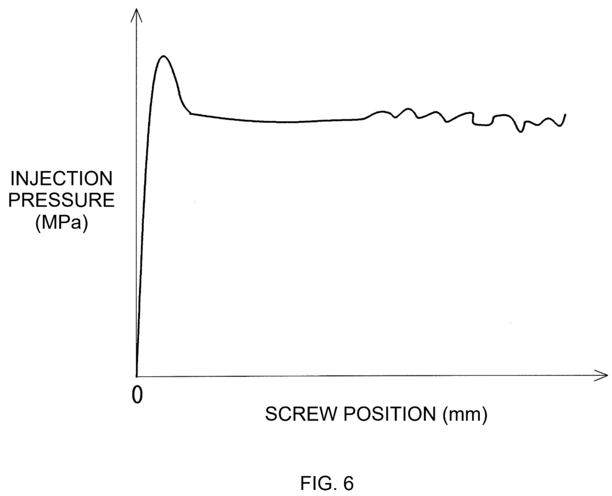

The reason for providing the first period 51 and the second period 52 is described with reference to FIG. 6. Different from the present embodiment, FIG. 6 is a graph illustrating the injection pressure of the molten resin 19 from the nozzle 70 if turning on/off the heater 730 is controlled by a PID controller in the injection process. The abscissa represents the position of the distal end of the screw 72, in millimeters (mm), where the origin represents zero. The origin is the position of the distal end of the screw 72 immediately before starting the injection process. A value further to the right on the abscissa represents that the screw 72 has moved further toward the mold 10. The right end of the graph is the position of the screw 72 at the end of the injection process. The abscissa in FIG. 6 may be considered to approximately coincide with the elapsed time from the start of the injection process. Such a value representing the position of the screw 72 is a numerical value obtained by arithmetic operation using the computer configuring the control device 3 based on information entities from the encoder 77. The ordinate represents the injection pressure of the molten resin 19, in megapascals (MPa), injected into the mold 10 from the nozzle 70. The injection pressure is a numerical value obtained by arithmetic operation using the computer based on information entities from the load cell 78.

As illustrated in FIG. 6, in the initial stage of the injection process where the screw 72 is close to the origin, the injection pressure is very high. This is considered to occur because, when the nozzle 70 is in contact with the mold 10, the nozzle 70 is cooled and thus the viscosity of the molten resin near the nozzle 70 increases. When the injection pressure becomes a predetermined value or more, the PID controller intervenes to cause the nozzle 70 to be heated by the heater 730 and the injection pressure to decrease. When the nozzle 70 is heated by the PID controller after the initial stage of the injection process, the viscosity of the molten resin decreases and thus the injection pressure is stabilized. However in the latter stage of the injection process, specifically, from a middle phase to a final phase, the injection pressure raises and falls. This is considered to occur by the PID controller alternately repeating control for turning on the heater 730 due to the temperature fall of the nozzle 70 and control for turning off the heater 730 due to the temperature rise of the nozzle 70. The rise and fall of the injection pressure in the initial stage and the latter stage of the injection process causes a risk of unevenness in the quality of molded articles.

In the example illustrated in FIG. 6, in the initial stage and the latter stage of the injection process, the injection pressure has a risk of raising and falling. To reduce the rise and fall, the first period 51 and the second period 52 illustrated in FIG. 5 are set. In the periods other than the first period 51 and the second period 52, the heater 730 may remain turned off or may be turned on/off by the PID controller. If the heater 730 is turned off in the periods other than the first period 51 and the second period 52, it is possible to reduce power consumption of the heater 730. It should be noted that the number and timing of the predetermined period 5 to heat the heater 730 may be different from the example in FIG. 5 depending on the kind of resin to constitute molded articles.

In the first period 51 and the second period 52, the heater 730 is continuously energized. The value of the current passing through the heater 730 may be a predetermined value set in advance or may be a varying value changing in accordance with the measurement results of the temperature sensor 79. The current value in the present embodiment is a predetermined value set in advance. That is, in the present embodiment, the heater 730 is open-loop controlled in the first period 51 and the second period 52.

The start heating times S1 and S2 in the predetermined period 5 are controlled by the control device 3 being triggered by, for example, any one information entity of the following (A), (B), or (C). The end heating times E1 and E2 in the predetermined period 5 are controlled by the control device 3 being triggered by, for example, either one information entity of the following (A) or (B).
(A) The position of the screw 72 in the cylinder 71
(B) The elapsed time from an arbitrary timing in the molding cycle
(C) The injection pressure from the nozzle 70

The information entity (A) is, for example, the position of the screw 72 obtained by an information entity from the encoder 77, which is a kind of position sensor. The control device 3 controls the operation of each component of the molding unit 2, and thus also controls the timing of starting the injection process. The control device 3 determines the start heating times S1 and S2 and the end heating times E1 and E2 based on the position of the screw 72 in the injection process. The control device 3 turns on the heater 730 at the start heating times S1 and S2 and turns off the heater 730 at the end heating times E1 and E2. For example, the control device 3 performs control, such as turning on the heater 730 when the position of the screw 72 is 1 mm away from the origin and turning off the heater 730 when the position of the screw 72 is 5 mm away from the origin. The position of the screw 72 to turn on/off the heater 730 may be determined by an operator based on data as illustrated in FIG. 6 obtained by, for example, preforming.

The information entity (B) is the elapsed time from an arbitrary timing in the molding cycle. The arbitrary timing is, for example, the start time of the injection process. For example, regarding the start heating times S1 and S2, the control device 3 performs control of turning on the heater 730 at the start time of the injection process or after a predetermined time has elapsed from the start time. Regarding the end heating times E1 and E2, for example, the control device 3 performs control of turning off the heater 730 after a predetermined time has elapsed from the start time of the injection process. In this situation, the end heating time E2 in the second period 52 including the latter half of the injection process may be set based on the elapsed time starting from the start time of the mold opening process.

The information entity (C) is, for example, the injection pressure obtained by an information entity from the load cell 78, which is a kind of pressure sensor. For example, the control device 3 starts heating of the heater 730 when the injection pressure becomes a threshold or more. The information entity (C) is not used as a trigger for the end of heating the heater 730. As illustrated in FIG. 6, the injection pressure minutely raises and falls particularly in the latter stage of the injection process, and thus it is difficult to set a threshold of the injection pressure to determine the end of heating the heater 730.

The information entities from (A) to (C) may be used in combination. For example, start of heating may be triggered by the information entity (A) and end of heating may be triggered by the information entity (B). As another example, start of heating may be triggered by the information entity (C) and end of heating may be triggered by the information entity (B).

An example of setting the timing to start heating and end heating by an operator via the input device 4 is described with reference to FIG. 3. The display section 45 of the input device 4 in the present embodiment displays fields of "HEATER," "STARTING MODE," "START," "DELAY," "STOP OUTPUT," and "STOP." The name of each field is merely expedient.

The "HEATER" field is a field to specify which heater(s) 73 to operate out of the plurality of heaters 73 provided in the injection molding machine 1. The "HEATER 1" in FIG. 3 is the heater 730 arranged around the outer circumference of the nozzle 70. The "HEATER" field allows changing the individual heater(s) 73 to be controlled. For example, by changing "HEATER 2" in FIG. 3 to "HEATER 1", it is possible to set the two predetermined periods 5 illustrated in FIG. 5.

The "STARTING MODE" field is a field to specify a trigger for start heating. In FIG. 3, "START INJECTION" means to refer to the timing of starting heating in the injection process. The "START" field is a field to specify the timing of causing the heater 730 to operate from the reference specified by the "STARTING MODE" field. The "START" field is in seconds (s). This field is "0.00 s" in FIG. 3, and in this case, heating of the heater 730 is started at the same time as the start of the injection process. The unit of the "START" field is automatically changed in accordance with the reference specified by the "STARTING MODE" field. For example, if "INJECTION POSITION" to refer to the position of the screw 72 at the start of the injection process is specified in the "STARTING MODE" field, the unit of the "START" field is changed to millimeters (mm).

The "DELAY" field is a field to specify the delay of the timing of starting heating. Use of the "DELAY" field allows a delay of the time specified by the "DELAY" field in the start of heating the heater 730 after satisfying the condition specified by the "START" field. Such a delay in the timing of starting heating is effective for making fine adjustments to the predetermined period 5 to improve the quality of molded articles.

The "STOP OUTPUT" field is a field to specify a trigger for end of heating. In FIG. 3, "INJECTION POSITION" means to set the trigger for the end of heating with reference to the position of the screw 72 at the start of the injection process. The trigger for the end of heating is switchable. The "STOP" field is a field to specify the timing of stopping the operation of the heater 730 from the reference specified by the "STOP OUTPUT" field. This field is "100 mm" in FIG. 3, and in this case, the heater 730 stops when the screw 72 has moved 100 mm further from the start of the injection process. The unit of the "STOP" field is automatically changed in accordance with the reference specified by the "STOP OUTPUT" field. For example, if "START INJECTION" is specified in the "STOP OUTPUT" field, the unit of the "STOP" field is changed to seconds.

The control of the heater 730 as just described is performed to allow reduction in the rise and fall of the injection pressure in the initial stage and the latter stage of the injection process illustrated in FIG. 6. As a result, it is possible to smooth the injection pressure throughout the entire stage of the injection process, and thus allowing manufacture of high quality molded articles with high yield.

## Claims

1. An injection molding machine, comprising:
a cylinder having a nozzle for injecting a molten resin into a mold;
a screw configured to move forward and backward in the cylinder;
a heater arranged around an outer circumference of the nozzle; and
a control device configured to control forward and backward movement of the screw and operation of the heater, wherein
the control device causes the heater to operate at a predetermined current value in a predetermined period, as part of an injection process to inject the molten resin into the mold by forward movement of the screw, of a molding cycle to heat the nozzle.

2. The injection molding machine according to Claim 1, wherein the predetermined period includes at least part of a latter stage of the injection process.

3. The injection molding machine according to Claim 1 or 2, further comprising an input device for inputting a timing of starting heating the heater and a timing of ending the heating in the predetermined period by an operator, wherein
the control device controls the start of heating and the end of heating in the predetermined period based on an input to the input device by the operator.

4. The injection molding machine according to Claim 3, wherein the control device performs the start of heating or the end of heating triggered by an information entity of a position of the screw in the cylinder, an information entity of an elapsed time from an arbitrary timing in the molding cycle, or an information entity of an injection pressure from the nozzle.
